# EUROPEAN PATENT SPECIFICATION

(11) **EP 1 590 883 B1**
(45) Date of publication and mention of the grant of the patent: **12.11.2008**
(21) Application number: 04706200.5
(22) Date of filing: 29.01.2004
(51) Int. Cl.: H02P 7/29, H02M 7/5387, H02P 7/00

(54) **DC/DC BRIDGE FOR CONTROLLING A DIRECT-CURRENT LOAD**
DC/DC BRÜCKENSCHALTUNG FÜR STEUERUNG EINER GLEICHSTROMLAST
PASSERELLE CC/CC POUR COMMANDER UNE CHARGE DE COURANT CONTINU

(30) Priority: 07.02.2003 FI 20030190
(43) Date of publication of application: 02.11.2005
(73) Proprietor: Kone Corporation, 00330 Helsinki (FI)
(72) Inventor: JAHKONEN, Pekka, FIN-05820 Hyvinkää (FI); PUTKINEN, Esa, FIN-05830 Hyvinkää (FI)
(74) Representative: Zipse Habersack Kritzenberger
(86) International application number: PCT/FI2004/000041
(87) International publication number: WO 2004/070933

(56) References cited:
- EP-A- 0 352 728
- US-A- 5 428 522
- US-B1- 6 211 657
- US-B1- 6 288 507

## Description

The present invention relates to a DC/DC bridge for controlling a direct-current load, said bridge having a power stage provided with controllable semiconductor switches and comprising two bridge sections, one of which bridge sections conducts direct current while the other one is controlled via PWM to regulate the current magnitude.

Elevator motor drives may be either alternating-current or -direct-current motor drives. The drives may be controlled e.g. via PWM (Pulse Width Modulation). Today, alternating-current motor drives are fairly common, especially because of the simple construction of alternating-current motors. However, direct-current motor drives are still in use. Neither is it always appropriate to replace a direct-current motor drive with an alternating-current motor derive, because e.g. gear-less direct-current motor drives and the direct-current motors used in them are durable and it is therefore unnecessary to replace them with alternating-durrent motor drives. Besides, replacing the motor entails relatively high costs.

Since the trend is towards alternating-current motor drives, it is also hardly rational to specifically develop power electronics systems for use in the control of direct-current drives. In addition, semiconductor components, such as IGBTs, used in alternating-current drives are all the time becoming increasingly efficient and economical. Moreover, it is to be expected that especially new regulations concerning network harmonics may alter the situation in future so that the use of traditional thyristor bridges used in direct-current drives will become more difficult.

Document WO-A-03/044935 overcomes the drawbacks of prior-art technology and achieves a new type of PWM-controlled DC/DC bridge for a direct-current load, such as a direct-current motor. The contribution of WO-A-03/044935 is based on a new principle of power electronics topology, wherein it is possible to utilize the technology of alternating-current drives in the control of direct-current motors. In WO-A-03/044935 a PWM-controlled bridge section consists of two bridge arms, and the semiconductor switches in these bridge arms are turned alternately into the conducting state. In the solution of the present invention however, the semiconductor switches in these bridge arms are turned on simultaneously.

The solution of the invention is defined in detail in the claims below.

The use of a PWM modulated H-bridge in motor drive circuits is known from US 6,288,507 or US 5,428,522.

By using the technology of the invention, it is possible to manufacture modern and economical PWM-controlled direct-current motor drives e.g. for elevator applications. By applying the invention, the power electronics technology and components of alternating-current drives manufactured in large production series can be utilized in direct-current drives. The conductor rails and other structures of the power stage circuits can be identical to those used in alternating-current drives. In addition, the use of semiconductor switches, such as IGBTs can be optimized even in direct-current applications. And, in particular, cost savings are achieved in development and production methods as the same methods can be used in both alternating-current and direct-current drives.

In the following, the invention will be described in detail with reference to an example and the attached drawings, wherein
Fig. 1 presents a prior-art direct-current bridge
Fig. 2 presents a network bridge in an alternating-current drive,
Fig. 3 presents a direct-current drive according to the invention, comprising a DC/DC bridge according to the invention,
Fig. 4 presents a timing diagram for a DC/DC bridge according to the invention, and
Fig. 5 illustrates the layout and cooling of the semiconductor switches in the DC/DC bridge of the invention.

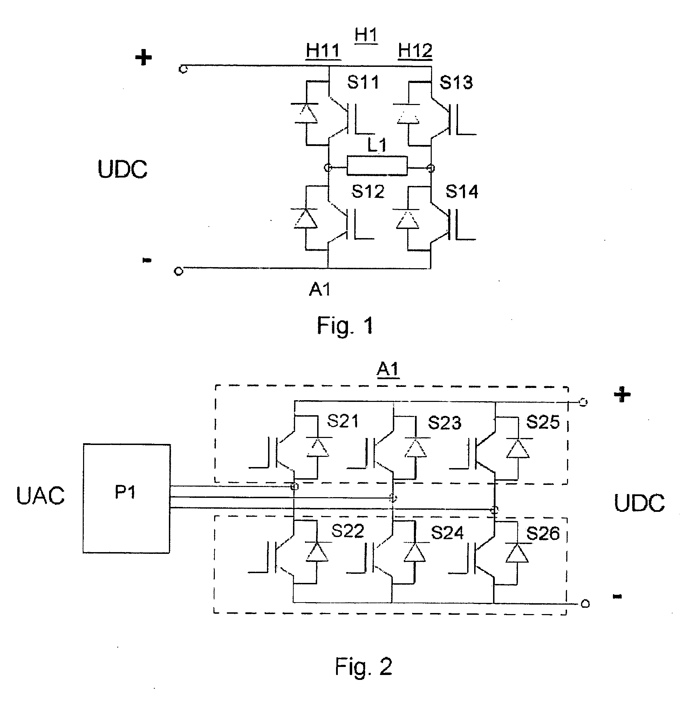

Fig. 1 presents a prior-art PWM-controlled H-bridge H1 of a direct-current motor drive intended e.g. for an elevator application. It consists of two bridge arms H11 and H12 connected to a direct-current source UDC, each arm containing controllable semiconductor switches S11 - S14 for the positive and negative poles, consisting of e.g. an inverse-parallel connection of an IGBT transistor and a diode. The bridge feeds a direct-current load L1, such as the direct-current motor of an elevator.

Fig. 2 correspondingly presents a network bridge A1 as used in a prior-art three-phase alternating-current drive to rectify the alternating voltage of the network UAC into a direct voltage UDC, and an alternating-current inductor unit P1 connected before it. The bridge has in the upper and lower arms controllable semiconductor switches S21 - S26, which are connected to each network phase and which may also consist of e.g. an inverse-parallel connection of an IGBT transistor and a diode.

In principle, the electric motor drive of the invention is like a prior-art three-phase alternating-current drive comprising a network converter (rectifier bridge), a motor bridge and inductors. The present invention relates expressly to the DC/DC bridge feeding the motor. The network bridge and the inductors may be e.g. as presented in Fig. 2. According to the invention, the same type of controllable semiconductor switches can be used in both the rectifier bridge and the motor bridge.

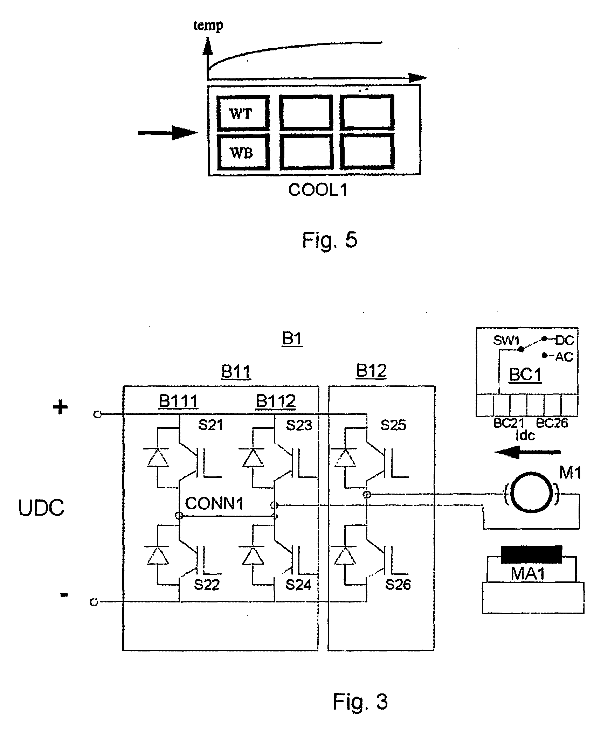

Fig. 3 presents a DC/DC bridge B1 according to the invention, which is used to feed a direct-current motor M1, a direct current Idc flowing in the motor. The bridge is controlled by a control unit BC1. Magnetization of the motor is accomplished using a separate magnetizing unit MA1, which is controlled in a manner known in itself.

The DC/DC bridge presented in Fig. 3 comprises two bridge sections B11, B12. The first bridge section in the bridge according to Fig. 3 comprises two arms B111 and B112, each containing controllable semiconductor switch units S21 - S24. The bridge arms are connected to each other on the power stage circuit board via a connector CONN1. The second bridge section B12 consists of a single arm with controllable semiconductor switch units S25 - S26. Thus, the bridge as a whole has three arms, corresponding to a three-phase DC/AC bridge. For each semiconductor switch, a controller BC21-BC26 is provided in the control unit BC1.

The modulation of the DC/DC bridge of the invention is done as follows: The PWM-controlled direct-current drive of the invention can use the same kind of semiconductor switches S21 - S26 for PWM control as are used in an alternating-current drive. The direct-current drive can be selected e.g. by a switch SW1 in the control unit. Instead of alternating current, a zero-frequency is used (nonrotating field). In the direct-current drive of the invention, not all of the semiconductor switches have to switch a high-frequency PWM control signal, typically of a frequency of a few kHz; two of the switches, S25 and S26, can be used to select the torque direction (up/down), and the switches in question conduct pure DC current. The switches S21 - S26 used for PWM control are turned on/off at a frequency of a few kHz to control the magnitude of the current lcd (the torque).

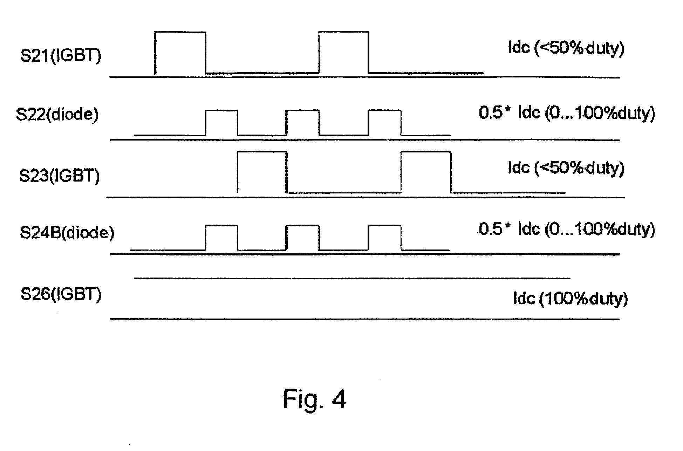

The greatest power dissipation occurs in the switches S21 - S26 used for PWM control. In the control method of the invention, the switches used for PWM control are turned into conduction alternately in different arms, so the switches in question are only operated for about 50% of normal conduction time or less. The action visualized in the timing diagram in Fig. 4, which represents the conduction times of switches S21, S23 and S26 as well as the conduction times of diodes S22 and S24 is that of document WO-A-03/044935. In the present invention switches S21 and S23 conduct simultaneously.

From a thermal point of view, the invention provides the advantage that the power stage of an alternating-current drive can be fully utilized in a direct-current drive. Thermal dissipation in the IGBTs used in the circuit is typically double the dissipation in the switches that are not used in PWM control. Therefore, according to the invention, switches S21 and S23 are only kept conducting for at most 50% of the time in a cyclic manner. The conduction period varies according to the voltage (current) required.

As compared with the prior-art H-bridge, the circuit of WO-A-03/044935 additionally provides the advantage that the ripple of the direct current ldc, which produces a disturbing noise, is reduced to about half of the original level. This advantage can be utilized by reducing the switching frequency of the PWM switches S21 - S24, which will diminish thermal dissipation in the switches and increase the load capacity of the bridge.

In practice, direct-current switches may have higher dissipation because direct-current losses are slightly greater than switching-PWM losses. Therefore, switches S25 and S26 are placed on the air intake side (arrow) of the cooling segment COOL1 (Fig. 5) as it is cooler than the middle part of the segment or the air exit side, as indicated by the temperature curve TEMP.

It is obvious to the person skilled in the art that different embodiments of the invention are not limited to the example described above, but that they may be varied within the scope of the claims presented below. Besides IGBT, the switches used may also consist of other fully gate-controlled components. Besides a direct-current motor, the load may also consist of e.g. a braking magnet of an elevator.

The arrangement of the invention can be used in a wide range of electric drives. By applying the principle of the invention, it will be possible to cover the power range of direct-current elevator drives by using the latest IGBT technology. Alternating-current and direct-current drive modules can be assembled on the same production line, and the application can be selected mainly via software control.

## Claims

1. DC/DC bridge for controlling a direct-current load (M1), said bridge being provided with controllable semiconductor switch units (S21-S26) and having two bridge sections(B11, B12) each connected to a side of the direct-current load, one (B12) of which bridge sections conducts direct current while the other one (B11) is controlled via pulse-width modulation (PWM) to regulate the current magnitude,
**characterized in that**
- the DC/DC bridge(B1) consists of three bridge arms corresponding to a three phase DC/AC bridge,
- two (B111, B112) of which arms are connected in parallel to form the said other bridge section (B11), and
- where the semiconductor switches in the parallel-connected first and second bridge arms are controlled via PWM to form a PWM-controlled bridge section (B11), and
- the semiconductor switches (S21, S23) in the PWM bridge arms are turned on simultaneously.

2. Control unit according to claim 1, wherein the semiconductor switches are mounted as bridge arm blocks on a cooling base (COOL1), to which a cooling medium, such as air, is supplied, **characterized in that** the semiconductor switch units (S25, S26) of the bridge section conducting direct current are disposed on the medium intake side.

3. Control unit according to claim 2, **characterized in that** the blocks are placed at different distances from each other to optimize the cooling.

4. Control unit according to claim 1, **characterized in that** the direct-current load is a direct-current motor.

5. Control unit according to claim 1, **characterized in that** the direct-current load is a braking magnet of an elevator.

6. Control unit according to claim 1, **characterized in that** the bridge arms are connected to each other (CONN1) on the power stage circuit board or at least at a point close to it.

7. Control unit according to claim 1, **characterized in that** the same bridge can function both in a direct-current drive and in an alternating-current drive, and that the control unit has a switch (SW1) for selecting the direct-current/alternating-current drive.

## Patentansprüche

1. DC/DC Brücke zur Steuerung einer Gleichstromlast (M1), welche Brücke mit steuerbaren Halbleiter-Schaltereinheiten (S21 - S26) versehen ist und zwei Brückenabschnitte (B11, B12) aufweist, die jeweils mit einer Seite der Gleichstromlast verbunden sind, wobei einer (B12) der Brückenabschnitte Gleichstrom leitet, während der andere (B11) mittels Pulsbreitenmodulation (PWM) gesteuert wird, um den Strom zu regeln,
**dadurch gekennzeichnet, dass** die DC/DC-Brücke (B1) aus drei Brückenarmen entsprechend einer 3-Phasen-DC/AC-Brücke besteht, wobei zwei (B111, B112) der Arme parallel geschaltet sind, um den anderen Brückenabschnitt (B11) zu bilden, und die Halbleiterschalter in den parallel geschalteten ersten und zweiten Brückenarmen mittels Pulsbreitenmodulation gesteuert sind, um einen PWM-gesteuerten Brückenabschnitt (B11) zu bilden, und dass die Halbleiterschalter (S21, S23) in den PWM-Brückenarmen gleichzeitig eingeschaltet werden.

2. Steuereinheit nach Anspruch 1, worin die Halbleiterschalter als Brückenarmenblöcke auf einer gekühlten Basis (COOL 1) montiert sind, welcher ein Kühlmedium wie zum Beispiel Luft zugeführt wird,
**dadurch gekennzeichnet, dass** die Halbleiterschalter-Einheiten (S25, S26) des Gleichstrom führenden Brückenabschnitts an der Eintrittsseite für das Medium angeordnet sind.

3. Steuereinheit nach Anspruch 2,
**dadurch gekennzeichnet, dass** die Blöcke in unterschiedlichen Abständen voneinander angeordnet sind, um die Kühlung zu optimieren.

4. Steuereinheit nach Anspruch 1,
**dadurch gekennzeichnet, dass** die Gleichstromlast ein Gleichstrom-Motor ist.

5. Steuereinheit nach Anspruch 1,
**dadurch gekennzeichnet, dass** die Gleichstromlast ein Bremsmagnet eines Aufzugs ist.

6. Steuereinheit nach Anspruch 1,
**dadurch gekennzeichnet, dass** die Brückenarme auf der Platine für die Leistungselektronik, oder zumindest an einem nahe daran gelegenen Punkt miteinander verbunden sind (CONN1).

7. Steuereinheit nach Anspruch 1,
**dadurch gekennzeichnet, dass** die gleiche Brücke sowohl in einem Gleichstromantrieb als auch in einem Wechselstromantrieb agieren kann, und dass die Steuereinheit einen Schalter (SW1) aufweist, um den Gleichstrom-/Wechselstromantrieb zu wählen.

## Revendications

1. Pont CC/CC pour commander une charge de courant continu (M1), ledit pont étant muni d'unités de commutation à semi-conducteurs commandables (S21-S26) et comportant deux sections de pont (B11, B12), chacune étant reliée à un côté de la charge de courant continu, l'une (B12) des sections de pont conduisant le courant continu alors que l'autre (B11) est commandée par modulation en largeur d'impulsion (PWM) afin de régler l'amplitude du courant,
**caractérisée par le fait que**
- le pont CC/CC (B1) est composé de trois bras de pont correspondant à un pont triphasé CC/CA,
- deux (B111, B112) des bras sont reliés en parallèle afin de former ladite autre section de pont (B11), et
- dans lequel les commutateurs dans les premier et second bras de pont à semi-conducteurs connectés en parallèle sont commandés par PWM afin de former une section de pont commandée par PWM (B11), et
- les commutateurs à semi-conducteur (S21, S23) dans les bras de pont PWM sont mis en service simultanément.

2. Unité de commande selon la revendication 1, dans laquelle les commutateurs à semi-conducteurs sont montés sous forme de blocs de bras de pont sur une base refroidissante (COOL1), auquel est fourni un moyen de refroidissement, tel que de l'air,
**caractérisée par le fait que** les unités de commutateurs à semi-conducteurs (S25, S26) de la section de pont conduisant le courant continu sont disposées sur la face d'admission du moyen de refroidissement.

3. Unité de commande selon la revendication 2, **caractérisée par le fait que** les blocs sont placés à des distances différentes les uns des autres afin d'optimiser le refroidissement.

4. Unité de commande selon la revendication 1, **caractérisée par le fait que** la charge de courant continu est un moteur à courant continu.

5. Unité de commande selon la revendication 1, **caractérisée par le fait que** la charge de courant continu est un aimant de freinage provenant d'un ascenseur.

6. Unité de commande selon la revendication 1, **caractérisée par le fait que** les bras de pont sont reliés les uns aux autres (CONN1) sur la carte de circuits de l'étage de puissance ou au moins à un point proche de cette dernière.

7. Unité de commande selon la revendication 1, **caractérisée par le fait que** le même pont peut fonctionner autant dans un système d'entraînement à courant continu que dans un système d'entraînement à courant alternatif, et que l'unité de commande a un commutateur (SW1) destiné à sélectionner le système d'entraînement à courant continu/à courant alternatif.
